# EUROPEAN PATENT SPECIFICATION

(11) **EP 4 163 310 B1**
(45) Date of publication and mention of the grant of the patent: **19.03.2025**
(21) Application number: 21816820.1
(22) Date of filing: 31.05.2021
(51) Int. Cl.: C08F 226/02, H01M 4/62, C08F 220/06, C09D 133/02, H01M 10/0525, H01M 4/139, H01M 4/13, H01M 4/04, H01M 10/052

(54) **NONAQUEOUS SECONDARY BATTERY ELECTRODE BINDER AND NONAQUEOUS SECONDARY BATTERY ELECTRODE SLURRY**
ELEKTRODENBINDEMITTEL FÜR WASSERFREIE SEKUNDÄRBATTERIE UND ELEKTRODENAUFSCHLÄMMUNG FÜR WASSERFREIE SEKUNDÄRBATTERIE
LIANT POUR ÉLECTRODE DE BATTERIE RECHARGEABLE NON AQUEUSE ET SUSPENSION D'ÉLECTRODE DE BATTERIE RECHARGEABLE NON AQUEUSE

(30) Priority: 05.06.2020 JP 2020098514
(43) Date of publication of application: 12.04.2023
(73) Proprietor: Resonac Corporation, Tokyo 105-7325 (JP)
(72) Inventor: TANAKA, Yuma, Tokyo 105-8518 (JP); TAKAHASHI, Kentarou, Tokyo 105-8518 (JP); FUKASE, Kazunari, Tokyo 105-8518 (JP); KURATA, Tomonori, Tokyo 105-8518 (JP); HANASAKI, Mitsuru, Tokyo 105-8518 (JP)
(74) Representative: Strehl & Partner mbB
(86) International application number: PCT/JP2021/020657
(87) International publication number: WO 2021/246364

(56) References cited:
- WO-A1-2017/150200
- WO-A1-2020/017442
- JP-A- 2015 162 384
- JP-A- 2015 162 384
- JP-A- 2018 160 397
- US-A1- 2019 058 195

## Description

### TECHNICAL FIELD

The present invention relates to a binder for a nonaqueous secondary battery electrode and a slurry for a nonaqueous secondary battery electrode.

### BACKGROUND ART

A secondary battery using a nonaqueous electrolyte (nonaqueous secondary battery) is superior to a secondary battery using an aqueous electrolyte in terms of high voltage, miniaturization, and weight reduction. For this reason, the nonaqueous secondary battery is widely used as power sources for notebook PCs, mobile phones, power tools, and electronic and communication devices. In recent years, the nonaqueous battery has also been used for electric vehicles and hybrid vehicles from the viewpoint of environmentally friendly vehicle application, but there is a strong demand for higher output, higher capacity, and longer life. A lithium ion secondary battery is a representative example of the nonaqueous secondary battery.

The nonaqueous secondary battery includes a positive electrode using a metal oxide or the like as an active material, a negative electrode using a carbon material such as graphite as an active material, and a nonaqueous electrolyte solvent mainly containing carbonates or flame-retardant ionic liquids. The nonaqueous secondary battery is a secondary battery in which the battery is charged and discharged by the movement of ions between a positive electrode and a negative electrode. Specifically, the positive electrode is obtained by applying a slurry comprising a metal oxide and a binder on a surface of a positive electrode current collector such as an aluminum foil, drying the slurry, and cutting the electrode current collector into an appropriate size. The negative electrode is obtained by applying a slurry comprising a carbon material and a binder on a surface of a negative electrode current collector such as a copper foil, drying the slurry, and cutting the electrode current collector into an appropriate size. The binder serves to bond the active materials to each other and to bond the active material to the current collector in the positive electrode or the negative electrode, thereby preventing the active material from being separated from the current collector.

As a binder, a polyvinylidene fluoride (PVDF) binder containing an organic solvent N-methyl-2-pyrrolidone (NMP) as a solvent is well known. However, the binder has low bonding properties between the active materials and between the active material and the current collector, and a large amount of binder is required for actual use. Therefore, there is a disadvantage that the capacity of the nonaqueous secondary battery is reduced. Further, since NMP, which is an expensive organic solvent, is used as the solvent, it is difficult to suppress the manufacturing cost.

As a method for solving these problems, development of a water-dispersible binder has been promoted. As a water-dispersible binder, for example, a styrene-butadiene rubber (SBR) based aqueous dispersion used in combination of carboxymethyl cellulose (CMC) as a thickener is known.

Patent Document 1 discloses an adhesive composition for a patch material containing a sodium acrylate-N-vinylacetamide copolymer. Patent Document 2 discloses a composition for hydrous gel containing sodium acrylate-N-vinylacetamide (55/45 (molar ratio)) copolymer.

Patent Document 3 discloses a binder for a nonaqueous battery electrode containing a sodium acrylate-N-vinylacetamide copolymer (copolymerization ratio: sodium acrylate/N-vinylacetamide = 10/90 by mass).

Patent Document 4 discloses a copolymer for a binder for a nonaqueous battery electrode containing a structural unit derived from N-vinylacetamide, a structural unit derived from sodium (meth)acrylate, and a structural unit derived from methoxypolyethylene glycol methacrylate.

### [Patent Document]

[Patent Document 1] Japanese Unexamined Patent Application Publication No. 2005-336166
[Patent Document 2] Japanese Unexamined Patent Application Publication No. 2006-321792
[Patent Document 3] WO 2017/150200
[Patent Document 4] WO 2020/017442

### SUMMARY OF INVENTION

### [Problems to Be Solved by the Invention]

However, the SBR-based binder described in Patent Document 1 requires the use of carboxymethyl cellulose as a thickener in combination, and the slurry preparation process is complicated. In addition, in this binder, the bonding properties between the active materials and between the active materials and the current collector are insufficient, and when the electrode is produced with a small amount of binder, a part of the active material is peeled off in the process of cutting the current collector.

The sodium acrylate-N-vinylacetamide copolymer disclosed in Patent Documents 1 and 2 contains many components derived from N-vinylacetamide. When such a polymer is mixed with a negative electrode active material and water to form an electrode slurry, aggregates are easily generated in the slurry.

The binder for a nonaqueous battery electrode disclosed in Patent Document 3 has a problem in that cracks are likely to occur in an electrode having a film with a large thickness, that is, having a large weight per area, as shown in Comparative Example 1 to be described later.

The binder for the nonaqueous battery electrode described in Patent Document 4 has room for improvement in the peeling strength of the electrode active material layer to the current collector, as shown in Comparative Example 2, which will be described later.

Therefore, it is an object of the present invention to provide a binder for a nonaqueous secondary battery electrode and a slurry for a nonaqueous secondary battery electrode which can greatly improve the peeling strength of an electrode active material layer to a current collector while suppressing the occurrence of cracks in the electrode active material layer formed on the current collector.

It is also an object of the present invention to provide a nonaqueous secondary battery electrode having few cracks and a high peeling strength of an electrode active material layer to a current collector.

Further, it is an object of the present invention to provide a nonaqueous secondary battery having an electrode having few cracks and a high peeling strength of an electrode active material layer to a current collector.

### [Means for Solving the Problem]

In order to solve the above problem, the present invention is as follows [1] to [14].

[1] A binder for a nonaqueous secondary battery electrode comprising a copolymer (P) which comprises:
   a structural unit (a) derived from a monomer (A) represented by formula (1), 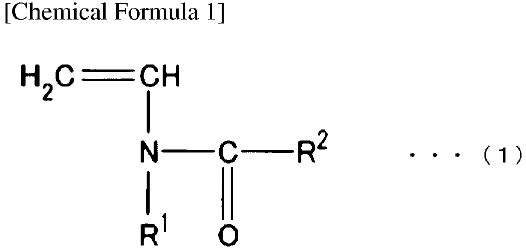
   wherein in the formula, R¹ and R² are each independently a hydrogen atom or an alkyl group having 1 to 5 carbon atoms;
   a structural unit (b) derived from a monomer (B) which is at least one selected from the group consisting of a (meth)acrylic acid and a salt thereof; and
   a structural unit (c) derived from a monomer (C) which is an ethylenically unsaturated carboxylic acid ester of an aromatic alcohol,
   wherein a content of each structural unit in the copolymer (P) is as follows:
      a content of the structural unit (a) is 0.5% by mass or more and 20.0% by mass or less,
      a content of the structural unit (b) is 50.0% by mass or more and 98.0% by mass or less,
      a content of the structural unit (c) is 0.3% by mass or more and 28.0% by mass or less, and
      a total content of the structural units (a), (b), and (c) is 85% by mass or more.
[2] The binder for the nonaqueous secondary battery electrode according to [1], comprising a structural unit (d) derived from a monomer (D) represented by formula (2), 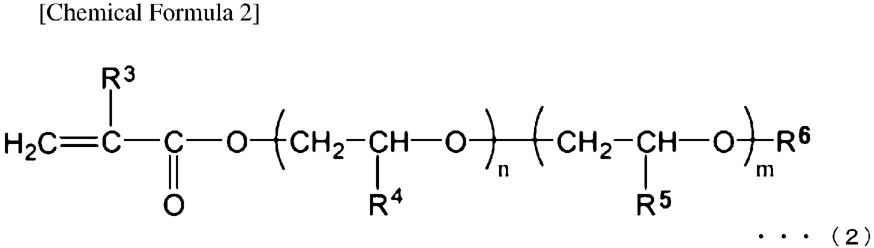
   wherein in the formula, R³, R⁴, and R⁶ are each independently a hydrogen atom or an alkyl group having 1 to 5 carbon atoms; R⁵ is an alkyl group having 1 to 6 carbon atoms, and has more carbon atoms than R⁴; n is an integer of 1 or greater; m is an integer of 0 or greater; and n + m ≥ 20,
   wherein a content of the structural unit (d) is 0.3% by mass or more and 18.0% by mass or less.
[3] The binder for the nonaqueous secondary battery electrode according to [2], wherein n + m ≤ 500 in the formula (2).
[4] The binder for the nonaqueous secondary battery electrode according to [2] or [3], wherein n + m ≥ 30 in the formula (2).
[5] The binder for the nonaqueous secondary battery electrode according to any one of [1] to [4], wherein the monomer (A) is N-vinylformamide or N-vinylacetamide.
[6] The binder for the nonaqueous secondary battery electrode according to any one of [1] to [5], wherein the monomer (B) is a salt of (meth)acrylic acid.
[7] The binder for the nonaqueous secondary battery electrode according to any one of [1] to [6], wherein the monomer (C) comprises a (meth)acrylic acid ester of an aromatic alcohol.
[8] The binder for the nonaqueous secondary battery electrode according to any one of [1] to [7], wherein the copolymer (P) has a weight-average molecular weight of 1 million or more and 10 million or less.
[9] The binder for the nonaqueous secondary battery electrode according to any one of [1] to [8], wherein the content of the structural unit (b) derived from the monomer (B) in the copolymer (P) is 60.0% by mass or more to 90.0% by mass or less.
[10] A binder composition for a nonaqueous secondary battery electrode, comprising:
   the binder for the nonaqueous secondary battery electrode according to any one of [1] to [9]; and
   an aqueous medium.
[11] The binder composition for the nonaqueous secondary battery electrode according to [10], wherein the nonaqueous secondary battery is a lithium-ion secondary battery.
[12] A slurry for a nonaqueous secondary battery electrode, comprising:
   the binder for a non-aqueous secondary battery electrode according to any one of [1] to [9];
   an electrode active material; and
   an aqueous medium.
[13] A non-aqueous secondary battery electrode, comprising:
   a current collector; and
   an electrode active material layer which is formed on a surface of the current collector,
   wherein the electrode active material layer comprises
      the binder for the nonaqueous secondary battery electrode according to any one of [1] to [9]; and
      an electrode active material.
[14] A lithium-ion secondary battery comprising the electrode according to [13].

### [Effect of the Invention]

According to the present invention, it is possible to provide a binder for a nonaqueous secondary battery electrode and a slurry for a nonaqueous secondary battery electrode which can greatly improve the peeling strength of the electrode active material layer to the current collector while suppressing the occurrence of cracks in the electrode active material layer formed on the current collector.

Further, according to the present invention, it is possible to provide a nonaqueous secondary battery electrode having few cracks and a high peeling strength of the electrode active material layer to the current collector.

Further, according to the present invention, it is possible to provide a nonaqueous secondary battery provided with an electrode having few cracks and a high peeling strength of the electrode active material layer to the current collector.

### DESCRIPTION OF EMBODIMENTS

Hereinafter, embodiments of the present invention will be described in detail. The battery according to the present embodiment is a secondary battery in which ions move between the positive electrode and the negative electrode in charge/discharge. The positive electrode includes a positive electrode active material, and the negative electrode includes a negative electrode active material. These electrode active materials are materials capable of ion intercaration and deintercalation. A preferred example of a secondary battery having such a configuration is a lithium ion secondary battery.

"(Meth)acrylic acid" refers to one or both of methacrylic acid and acrylic acid. "(Meth)acrylic acid monomer" refers to one or both of methacrylic acid monomer and acrylic acid monomer. "(Meth)acrylate" refers to one or both of methacrylate and acrylate.

The "weight-average molecular weight" is a pullulan-equivalent value calculated using gel permeation chromatography (GPC).

### <1. Binder for Nonaqueous Secondary Battery Electrode>

The binder for the nonaqueous secondary battery electrode (alternatively, a non-aqueous secondary battery electrode binder, hereinafter, sometimes referred to as "electrode binder") according to the present embodiment includes a copolymer (P) described below. The electrode binder may contain other components, for example, a polymer other than the copolymer (P), a surfactant, etc.

Here, the electrode binder is composed of a component which remains without being volatilized in a step involving heating in the process of producing a battery described later. Specifically, the component constituting the electrode binder is a component remaining after treatment of weighing 1 g of a mixture containing the electrode binder on an aluminum dish having a diameter of 5 cm and drying it at 110°C for 5 hours under atmospheric pressure with air circulating in a dryer.

The content of the copolymer (P) in the electrode binder is preferably 80% by mass or more, more preferably 90% by mass or more, still more preferably 95% by mass or more, and most preferably 98% by mass or more. This is because the contribution to the objective effect of the present invention by the copolymer (P) can be increased.

The copolymer (P) includes a structural unit (a) derived from a monomer (A) represented by the formula (1) which will be described later; a structural unit (b) derived from a monomer (B) which is at least one selected from the group consisting of a (meth)acrylic acid and a salt thereof; and a structural unit (c) derived from a monomer (C) which is an ethylenically unsaturated carboxylic acid ester of an aromatic alcohol. The copolymer (P) may contain a structural unit (d) derived from a monomer (D) represented by the formula (2) which will be described later. The copolymer (P) may include a structural unit (e) derived from another monomer (E) that is copolymerizable with the monomer (A), the monomer (B), and the monomer (C); and does not fall under any one of the monomer (A), the monomer (B), the monomer (C), and the monomer (D).

The weight-average molecular weight of the copolymer (P) is preferably 1 million or more, more preferably 1.5 million or more, and still more preferably 2 million or more. The weight-average molecular weight of the copolymer (P) is preferably 10 million or less, more preferably 7.5 million or less, and still more preferably 5 million or less.

### <1-1. Monomer (A)>

The monomer (A) is a compound represented by formula (1). The monomer (A) may contain a plurality of kinds of compounds represented by formula (1).

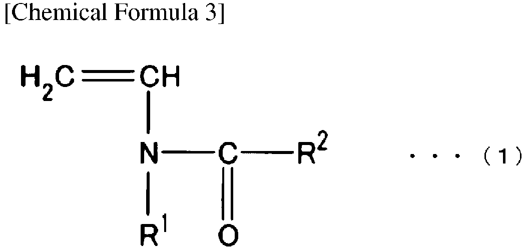

(In the formula (1), R¹ and R² are each independently a hydrogen atom or an alkyl group having 1 to 5 carbon atoms.)

In the formula (1), R¹ and R² are preferably each independently a hydrogen atom or an alkyl group having 1 to 3 carbon atoms, and R¹ and R² are more preferably each independently a hydrogen atom or a methyl group.

More preferred examples of the R¹, R² combination include R¹: H, R²: H (That is, the monomer (A) is N-vinylformamide.); and R¹: H, R²: CH₃ (That is, the monomer (A) is N-vinylacetamide.).

### <1-2. Monomer (B)>

The monomer (B) comprises at least one kind selected from the group consisting of (meth)acrylic acid and a salt thereof. The salt of (meth)acrylic acid is preferably composed of a salt between (meth)acrylic acid and a monovalent cation, and is more preferably composed of at least one kind selected from sodium (meth)acrylate, potassium (meth)acrylate, and ammonium (meth)acrylate. Among them, it is more preferable to contain at least one of sodium (meth)acrylate and ammonium (meth)acrylate, and it is still more preferable to use sodium acrylate. The salt of (meth)acrylic acid may be obtained, for example, by neutralizing (meth)acrylic acid with a hydroxide, ammonia water, or the like; and preferably by neutralizing (meth)acrylic acid with sodium hydroxide from the viewpoint of availability.

For pH adjustment, the monomer (B) preferably contains 60% by mass or more of the salt of (meth)acrylic acid, more preferably 80% by mass or more, and still more preferably 95% by mass or more.

Here, when (meth)acrylic acid is used as the monomer (B) and neutralized with a neutralizing agent after polymerization, it is assumed that the structural unit derived from (meth)acrylic acid forms a salt by an equivalent amount of the cation (valence of cation × molar number of cation, and so on) contained in the neutralizing agent. If the equivalent amount of cations contained in the neutralizing agent is greater than the mole number of (meth)acrylic acid used in the polymerization, all of (meth)acrylic acid is considered to form a salt. On the other hand, when the equivalent amount of cations contained in the neutralizing agent is less than the mole number of (meth)acrylic acid used in the polymerization, all of the cations are considered to form a salt with (meth)acrylic acid. When the cation contained in the neutralizing agent is divalent or more, it is assumed that one cation is bonded to a number of structural units derived from (meth)acrylic acid and wherein the number is the same as the valence of the cation.

### <1-3. Monomer (C)>

The monomer (C) is an ethylenically unsaturated carboxylic acid ester of an aromatic alcohol. The monomer (C) may contain only one compound of two or more compounds. The monomer (C) preferably contains a (meth)acrylic acid ester of an aromatic alcohol ((meth)acrylate of an aromatic alcohol), and more preferably consists of (meth)acrylic acid ester of an aromatic alcohol ((meth)acrylate of an aromatic alcohol).

Examples of the (meth)acrylic acid ester of an aromatic alcohol ((meth)acrylates of aromatic alcohols) include benzyl (meth)acrylate, phenoxyethyl (meth)acrylate, phenoxyethylene glycol (meth)acrylate, phenoxydiethylene glycol (meth)acrylate, phenoxypolyethylene glycol (meth)acrylate, ethoxylated-o-phenylphenol (meth)acrylate, 2-hydroxy-3-phenoxypropyl (meth)acrylate, and the like. The monomer (C) further preferably includes benzyl (meth)acrylate and phenoxyethyl (meth)acrylate among these compounds.

### <1-4. Monomer (D)>

The monomer (D) is a compound represented by formula (2). The monomer (D) may comprise a plurality of kinds of compounds represented by formula (2).

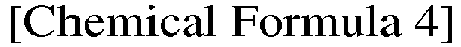

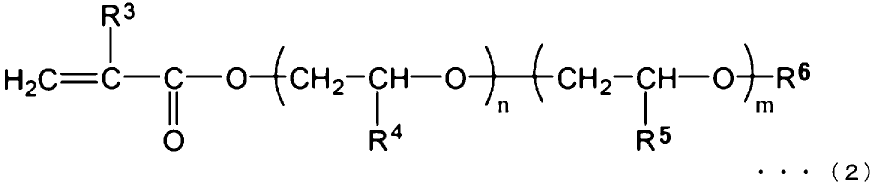

(In the formula, R³, R⁴, and R⁶ are each independently a hydrogen atom or an alkyl group having 1 to 5 carbon atoms. R⁵ is an alkyl group having 1 to 6 carbon atoms, and has more carbon atoms than R⁴. n is an integer of 1 or greater, m is an integer of 0 or greater, and n + m ≥ 20.)

In the formula (2), it is preferable that R³, R⁴, and R⁶ are each independently a hydrogen atom or an alkyl group having 1 to 3 carbon atoms, and it is more preferable that R³, R⁴, and R⁶ are each independently a hydrogen atom or a methyl group. R⁶ is more preferably a methyl group.

In the formula (2), n is an integer of 1 or more, m is an integer of 0 or more, and n + m ≥ 20. This is because, when the electrode is produced by using the copolymer (P) as a binder for the electrode active material, the flexibility of the electrode is improved, and the occurrence of cracks is suppressed. From this viewpoint, it is preferable that n + m ≥ 30, and more preferable that n + m ≥ 40. Further, it is preferable that n + m ≤ 500, more preferable that n + m ≤ 200, and still more preferable that n + m ≤ 150. This is because the bonding force of the binder becomes higher.

Although the formula (2) is limited to include n structural units including R⁴ and m structural units including R⁵, the arrangement of these structural units is not limited. That is, in the case of m ≥ 1, in the formula (2), each structural unit may have a continuous block structure in whole or in part, may have a structure arranged with a periodic regularity such as a structure in which two structural units are alternately arranged, or may have a structure in which two structural units are randomly arranged. A preferred form of the copolymer of formula (2) is a structure arranged with a periodic regularity or a randomly arranged structure. This is because that deviation of distribution of each structural unit in the molecular chain forming formula (2) can be suppressed. A more preferred form of the copolymer of formula (2) is a randomly arranged structure. This is because the polymerization is possible by a radical polymerization initiator without using a special catalyst, and the manufacturing cost can be reduced.

In the formula (2), preferable examples of the combination of R³, R⁴, R⁵, R⁶, n, and m are shown in Table 1 as below.

**[Table 1]**

| No. | R³ | R⁴ | R⁵ | R⁶ | n | m | n+m |
|---|---|---|---|---|---|---|---|
| d1 | H | H | - | CH₃ | 40-150 | 0 | 40-150 |
| d2 | CH₃ | H | - | CH₃ | 40-150 | 0 | 40-150 |
| d3 | H | CH₃ | - | CH₃ | 40-150 | 0 | 40-150 |
| d4 | CH₃ | CH₃ | - | CH₃ | 40-150 | 0 | 40-150 |
| d5 | H | H | CH₃ | CH₃ | 0.9n≦m≦1.1n | | 40-150 |
| d6 | CH₃ | H | CH₃ | CH₃ | 2.5n≦m≦3.5n | | 40-150 |

It is more preferable that m = 0 in the formula (2). Examples of the monomer (D) having m = 0 include a mono(meth)acrylate of polyethylene glycol, and more specifically, methoxypolyethylene glycol (meth)acrylate (for example, monomers d1, d2 in Table 1) and the like. An example of a methoxypolyethylene glycol methacrylate is VISIOMER (registered trademark) MPEG 2005 MA W from EVONIK INDUSTRIES. In this product, R³ = CH₃, R⁴ = H, R⁶ = CH₃, n = 45, and m = 0. Another example of methoxypolyethylene glycol methacrylate is VISIOMER (registered trademark) MPEG 5005 MA W from EVONIK INDUSTRIES. In this product, R³ = CH₃, R⁴ = H, R⁶ = CH₃, n = 113, and m = 0.

Another example of the monomer (D) of m = 0 includes a mono(meth)acrylate of polypropylene glycol, and more specifically, methoxypolypropylene glycol (meth)acrylate (for example, monomers d3, d4 in Table 1) and the like.

### <1-5. Another Monomer (E)>

Another monomer (E) that does not fall under any one of the monomer (A), the monomer (B), the monomer (C), and the monomer (D) is not particularly limited and preferably is composed of a hydrophilic ethylenically unsaturated compound, but may also include a hydrophobic ethylenically unsaturated compound.

Examples of the hydrophilic ethylenically unsaturated monomer include compounds having at least one polymerizable ethylenically unsaturated bond and having a polar group such as a carboxy group, a hydroxy group, an amide bond, or a cyano group. From the above-mentioned compounds, (meth)acrylic acid and a salt thereof which fall under the monomer (B) are excluded. Examples of the ethylenically unsaturated monomer having a carboxy group include itaconic acid, β-carboxyethyl acrylate, maleic acid, fumaric acid, crotonic acid, and half ester of unsaturated dicarboxylic acid. Examples of the ethylenically unsaturated monomer having a hydroxy group include 2-hydroxyethyl (meth)acrylate, 2-hydroxypropyl (meth)acrylate, 4-hydroxybutyl acrylate, 1,4-cyclohexanedimethanol monoacrylate, vinyl alcohol, and the like. The vinyl alcohol may include a substance obtained by carrying out a treatment such as saponification after polymerization using an ester such as vinyl acetate as a monomer. Examples of the ethylenically unsaturated monomer having an amide bond include (meth)acrylamide, N-alkyl (meth)acrylamide, N, N-dialkyl (meth)acrylamide, N-hydroxyalkyl (meth)acrylamide in which the alkyl group has a carbon number of 1 to 3, diaceton (meth)acrylamide, dimethylaminoalkyl (meth)acrylamide in which the remaining alkyl group after removing the dimethylamino group has a carbon number of 1 to 5, and (meth)acrylamide-2-methylpropanesulfonic acid. Examples of the ethylenically unsaturated monomer having a cyano group include (meth)acrylonitrile and the like.

### <1-6. Content of Structural Unit in Copolymer (P)>

The content of each structural unit in the copolymer (P) will be described below. Here, when (meth)acrylic acid is used as the monomer (B) and it is neutralized with a neutralizing agent after polymerization, it is assumed that the structural unit derived from (meth)acrylic acid is a structural unit in which a salt is formed by an equivalent amount (valence of cation × molar number of cation, and so on) of the cation contained in the neutralizing agent. The details are as described in the section of <1-2. Monomer (B)>.

The content of the structural unit (a) is 0.5% by mass or more, preferably 1.0% by mass or more, more preferably 3.0% by mass or more, and still more preferably 7.0% by mass or more. This is because it is possible to produce a slurry for forming electrode having excellent dispersibility of an electrode active material and a conductive auxiliary agent and good coating properties when producing a slurry for forming electrode to be described later. The content of the structural unit (a) is 20.0% by mass or less, preferably 15.0% by mass or less, and more preferably 12.5% by mass or less. This is because the occurrence of cracks in the electrodes, which will be described later, is suppressed and the productivity of the electrodes is improved.

The content of the structural unit (b) (total amount of (meth)acrylic acid and salt thereof) is 50.0% by mass or more, preferably 60.0% by mass or more, and more preferably 70.0% by mass or more. This is because it is possible to obtain an electrode active material layer having a high peel strength to the current collector. The content of the structural unit (b) (total amount of (meth)acrylic acid and salt thereof) is 98.0% by mass or less, preferably 94.5% by mass or less, more preferably 93.0% by mass or less, and still more preferably 90.0% by mass or less. This is because the dispersibility of solid components such as an electrode active material and a conductive auxiliary agent in the preparation of an electrode slurry, which will be described later, is further improved.

The content of the structural unit (c) is 0.3% by mass or more, preferably 0.5% by mass or more, more preferably 3.0% by mass or more, and still more preferably 6.0% by mass or more. This is because the occurrence of cracks in the electrodes, which will be described later, is suppressed and the productivity of the electrodes is improved. The content of the structural unit (c) is 28.0% by mass or less, preferably 23.0% by mass or less, more preferably 18.0% by mass or less, and still more preferably 15.0% by mass or less. This is because the peeling strength of the electrode active material layer is improved and the swelling of the electrode active material layer in the electrode to be described later is suppressed. Further, in the nonaqueous secondary battery described later, the cycle characteristic (discharge capacity retention rate) is improved.

The content of the structural unit (d) is preferably 0.3% by mass or more, more preferably 0.9% by mass or more, and still more preferably 3.0% by mass or more. The content of the structural unit (d) is preferably 18.0% by mass or less, more preferably 12.0% by mass or less, and still more preferably 7.0% by mass or less. This is because the occurrence of cracks in the electrode, described later, is suppressed, the peeling strength of the electrode active material layer is improved, and the swelling of the electrode active material layer is suppressed. Further, in the nonaqueous secondary battery described later, the cycle characteristic (discharge capacity retention rate) is improved.

The total content of the structural units (a), (b), and (c) is 85% by mass or more, more preferably 90% by mass or more, and still more preferably 93% by mass or more. This is because it is possible to enhance the contribution of the structural units (a), (b), and (c) to the effect for which the present invention is intended.

### <1-7. Production of Copolymer (P)>

The copolymer (P) is preferably synthesized by radical polymerization in an aqueous medium. Examples of the polymerization method include a method in which all monomers used for polymerization are collectively charged and polymerized, a method in which a monomer used for polymerization is continuously supplied and polymerized, and the like. The content of each monomer in the total monomer used for the synthesis of the copolymer (P) is the content of the structural unit, corresponding to the monomer, in the copolymer (P). For example, the content of the monomer (A) in the total monomer used for the synthesis of the copolymer (P) is the content of the structural unit (a) in the copolymer (P) to be synthesized. However, when (meth)acrylic acid is used as the monomer (B) and it is neutralized with a neutralizing agent after polymerization, it is considered that the structural unit derived from (meth)acrylic acid forms a salt by an equivalent amount (valence of cation × molar number of cation, and so on) of the cation contained in the neutralizing agent. When the equivalent amount of cations contained in the neutralizing agent is greater than the mole number of (meth)acrylic acid used in the polymerization, all (meth)acrylic acid is considered to form a salt. On the other hand, when the equivalent amount of cations contained in the neutralizing agent is less than the mole number of (meth)acrylic acid used in the polymerization, it is considered that all cations form a salt with (meth)acrylic acid (that is, (meth)acrylic acid forms a salt by the amount of cation contained in the neutralizing agent). The radical polymerization is preferably carried out at a temperature of 30 to 90°C. A specific example of a polymerization method of the copolymer (P) will be described in detail in examples to be described later.

Examples of a radical polymerization initiator include, but are not limited to, ammonium persulfate, potassium persulfate, hydrogen peroxide, t-butyl hydroperoxide, and azo compounds. Examples of the azo compound include 2, 2'-azobis (2-methylpropionamidine) dihydrochloride. When the polymerization is carried out in water, a water-soluble polymerization initiator is preferably used. If necessary, a radical polymerization initiator and a reducing agent may be used in combination for redox polymerization at the time of polymerization. Examples of the reducing agent include sodium bisulfite, longarit and ascorbic acid.

Although it is preferable to use water as the aqueous medium, a mixture of water and a hydrophilic solvent may be used as the aqueous medium as long as the polymerization stability of the resulting binder copolymer is not impaired. Examples of the hydrophilic solvent to be added to water include methanol, ethanol, and N-methylpyrrolidone.

### <2. Binder Composition for Nonaqueous Secondary Battery Electrode>

The binder composition for a nonaqueous secondary battery electrode (alternatively, the nonaqueous secondary battery electrode binder composition, hereinafter, referred to as "electrode binder composition") of the present embodiment includes an electrode binder and an aqueous medium as a medium. The electrode binder composition may further contain other components such as a pH adjuster, a surfactant, etc., if necessary.

The aqueous medium contained in the electrode binder composition contains water. The aqueous medium contained in the electrode binder composition may contain a hydrophilic solvent. Examples of the hydrophilic solvent include methanol, ethanol, and N-methylpyrrolidone. In the aqueous medium contained in the electrode binder composition, the content of water in the aqueous medium is preferably 80% by mass or more, more preferably 90% by mass or more, and still more preferably 95% by mass or more.

The medium contained in the electrode binder composition may be, for example, the same as the aqueous medium used for the synthesis of the copolymer (P), of an aqueous medium which is obtained by further adding solvent such as water into the above-mentioned aqueous medium. In the electrode binder composition of the present embodiment, the electrode binder may be dissolved in the medium or dispersed in the medium.

The content of the electrode binder in the electrode binder composition is preferably 30% by mass or less, and more preferably 20% by mass or less. This is because it is possible to suppress an increase in viscosity of an electrode binder composition, and as a result, it is possible to efficiently disperse an electrode active material or the like at the process of producing electrode slurry by mixing the electrode active material described later or the like.

The content of the electrode binder in the electrode binder composition is preferably 3.0% by mass or more, more preferably 5.0% by mass or more, and still more preferably 8.0% by mass or more. The electrode slurry and the electrode can be prepared using a smaller amount of the electrode binder composition by suppressing the amount of volatile component.

The pH of the electrode binder composition is preferably 4.0 or more, more preferably 5.0 or more, and still more preferably 6.0 or more. This is for efficiently dispersing the electrode active material of the like when the electrode slurry is prepared by mixing the electrode active material or the like which will be described later. The pH of the electrode binder composition is preferably 10 or less, more preferably 9.0 or less, and still more preferably 8.0 or less. This is because it is possible to efficiently disperse the electrode active material or the like at the process of preparing electrode slurry by mixing the electrode active material described later or the like. Here, pH is a value measured by a pH meter at a liquid temperature of 23°C.

### <3. Slurry for Nonaqueous Secondary Battery Electrode>

In the slurry for the non-aqueous secondary battery electrode (alternatively, non-aqueous secondary battery electrode slurry, hereinafter, referred to as "electrode slurry") of the present embodiment, an electrode binder and an electrode active material are dissolved or dispersed in an aqueous medium. The electrode slurry of the present embodiment may contain a conductive auxiliary agent, a thickener, etc., if necessary, but it is preferable that the electrode slurry does not contain a thickener in order to simplify the electrode slurry preparation process. In order to prepare the electrode slurry, there is no particular limitation as long as each material is uniformly dissolved and dispersed. The method for preparing the electrode slurry is not particularly limited, but includes, for example, a method of mixing necessary components using a mixing apparatus such as a stirring type, a rotating type, or a shaking type.

The concentration of the nonvolatile component of the electrode slurry is preferably 30% by mass or more, and more preferably 40% by mass or more. This is because more electrode active material layers may be formed with a smaller amount of electrode slurry. The concentration of the nonvolatile component of the electrode slurry is preferably 70% by mass or less, and more preferably 60% by mass or less. The nonvolatile concentration can be adjusted according to the amount of aqueous medium.

The concentration of the nonvolatile component is, unless otherwise specified, the ratio of the mass of the remaining component to the mass before drying, wherein he remaining component is obtained by weighing 1 g of the mixture on an aluminum dish of 5 cm in diameter and then drying it at 130°C for 1 hour under atmospheric pressure with air circulating in the dryer.

### <3-1. Content of Electrode Binder>

The content of the electrode binder in the electrode slurry is preferably 0.5% by mass or more, more preferably 1.0% by mass or more, and still more preferably 2.0% by mass or more with respect to the total mass of the electrode active material (described later), the conductive auxiliary agent (described later), and the electrode binder. This is because the bonding ability between the electrode active materials and between the electrode active materials and the current collector can be kept by the electrode binder. The content of the electrode binder in the electrode slurry is preferably 7.0% by mass or less, more preferably 5.0% by mass or less, and still more preferably 4.0% by mass or less with respect to the total mass of the electrode active material, the conductive auxiliary agent, and the electrode binder. This is because the charge/discharge capacity of the electrode active material layer formed by using the electrode slurry can be increased, and the internal resistance of the battery can be reduced.

### <3-2 Electrode Active Material>

The nonaqueous secondary battery is not particularly limited, but in the case that the nonaqueous secondary battery is a lithium-ion secondary battery, examples of the negative electrode active material include a conductive polymer, a carbon material, lithium titanate, silicon, a silicon compound, and the like. Examples of the conductive polymer include polyacetylene and polypyrrole. Examples of the carbon materials include coke such as petroleum coke, pitch coke, and coal coke; carbon black such as carbides of organic compounds, carbon fibers, acetylene black; graphite such as artificial graphite and natural graphite. Examples of the silicon compound include SiOₓ(0.1 ≦ x ≦ 2.0).

As the electrode active material, a composite material containing Si and graphite (Si/Graphite) may be used. Among these active materials, carbon materials, lithium titanate, silicon, and silicon compounds are preferably used in view of the large energy density per volume. In addition, carbon materials such as coke, carbides of organic compounds, and graphite, and silicon-containing materials such as SiOₓ (0.1 ≦ x ≦ 2.0), Si, and Si/graphite have a remarkable effect of improving the bonding ability by the binder copolymer (P). For example, a specific example of artificial graphite is SCMG (registered trademark)-XRs (manufactured by Showa Denko K.K.). As the negative electrode active material, two or more of the materials mentioned above may be combined.

Examples of a positive electrode active material of a lithium ion secondary battery include lithium cobaltate (LiCoO₂); lithium complex oxide containing nickel; spinel type lithium manganate (LiMn₂O₄); olivine type lithium iron phosphate; and chalcogen compounds such as TiS₂, MnO₂, MoO₃, and V₂O₅. The positive electrode active material may contain either one of these compounds alone or a plurality of compounds. Other alkali metal oxides can also be used. Examples of nickel-containing lithium complex oxides include Ni-Co-Mn system lithium complex oxides, Ni-Mn-Al system lithium complex oxides, and Ni-Co-Al system lithium complex oxides. Specific examples of positive electrode active materials include LiNi_{1/3}Mn_{1/3}Co_{1/3}O₂, LiNi_{3/5}Mn_{1/5}Co_{1/5}, and the like.

### <3-3. Conductive Auxiliary Agent>

The electrode slurry may contain, as a conductive auxiliary agent, carbon black, vapor phase carbon fiber, or the like. A specific example of the gas phase process carbon fiber includes VGCF (registered trademark)-H (manufactured by Showa Denko K.K.).

### <3-4. Aqueous Media>

The aqueous medium of the electrode slurry contains water. The aqueous medium of the electrode slurry may contain a hydrophilic solvent. Examples of the hydrophilic solvent include methanol, ethanol, and N-methylpyrrolidone. The water content in the aqueous medium is preferably 80% by mass or more, more preferably 90% by mass or more, and still more preferably 95% by mass or more. The aqueous medium of the electrode slurry may be the same as the aqueous medium contained in the electrode binder composition.

### <4. Electrode>

The electrode of the present embodiment has a current collector and an electrode active material layer formed on the surface of the current collector. The electrode active material layer includes an electrode active material and an electrode binder of the present embodiment. The shape of the electrode may be, for example, a laminate or a wound body, but is not particularly limited. The current collector is not particularly limited and is preferably a sheet-like metal having a thickness of 0.001 to 0.5 mm. Examples of the metal include iron, copper, aluminum, nickel, and stainless steel. When the nonaqueous secondary battery is a lithium-ion secondary battery, aluminum is preferable as a material of the current collector of the positive electrode, and copper is preferable as a material of the current collector of the negative electrode.

The electrode of the present embodiment can be produced, for example, by applying an electrode slurry on a current collector and drying it, but is not limited to this method.

Examples of the method for applying the electrode slurry on the current collector include a reverse roll method, a direct roll method, a doctor blade method, a knife method, an extrusion method, a curtain method, a gravure method, a bar method, a dip method, a squeeze method or the like. Among them, a doctor blade method, a knife method or an extrusion method are preferable, and the applying method using a doctor blade is more preferable. This is because the coating film is suitable for various physical properties such as viscosity and dryness of the electrode slurry, and has a good surface condition.

The electrode slurry may be applied to only one side of the current collector, or may be applied to both sides. When the electrode slurry is applied to both sides of the current collector, the slurry may be applied one by one, or both sides may be applied simultaneously. The electrode slurry may be applied continuously or intermittently to the surface of the current collector. The coating amount and coating range of the electrode slurry can be appropriately determined in accordance with the size of the battery. The weight per area of the electrode active material layer after drying is preferably 4 to 20 mg/cm², more preferably 6 to 16 mg/cm².

An electrode sheet is obtained by drying the electrode slurry which is applied to the current collector. The drying method is not particularly limited, but for example, hot air, vacuum, (far) infrared, electron beam, microwave, and cold air may be used alone or in combination. The drying temperature is preferably from 40°C to 180°C, and the drying time is preferably from 1 minute to 30 minutes.

The electrode sheet may be used as an electrode as it is, or may be cut to form an electrode of an appropriate size and shape. The method of cutting the electrode sheet is not particularly limited, but, for example, a slit, laser, wire cut, cutter, Thomson, or the like can be used.

The electrode sheet may be pressed as needed, before or after cutting the electrode sheet. Thus, the electrode active material is firmly bonded to the electrode, and further, the electrode is thinned to make the nonaqueous battery compact. As the pressing method, a general method can be used, and in particular, a die pressing method and a roll pressing method are preferably used. The pressing pressure is not particularly limited, but is preferably 0.5 to 5 t/cm² in a range that does not affect the doping/de-doping of lithium ions or the like to the electrode active material by pressing.

### <5. Battery>

A lithium-ion secondary battery will be described as a preferred example of the battery according to the present embodiment, but the configuration of the battery is not limited to the configuration described below. In the lithium-ion secondary battery according to the example described here, components such as a positive electrode, a negative electrode, an electrolytic solution, and, if necessary, a separator are housed in an outer package. At least one of the positive electrode and the negative electrode includes the electrode binder according to the present embodiment.

### <5-1. Electrolytic Solution>

A nonaqueous liquid having ionic conductivity is used as the electrolyte solution. The electrolyte solution may be a solution in which an electrolyte is dissolved in an organic solvent, an ionic liquid, or the like, but the former is preferable because the manufacturing cost is low and a battery having low internal resistance can be obtained.

As the electrolyte, an alkali metal salt can be used, and it can be appropriately selected according to the kind of the electrode active material or the like. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, lithium aliphatic carboxylates and the like. Other alkali metal salts may also be used as the electrolyte.

As the organic solvent for dissolving the electrolyte, it is not particularly limited, but a carbonate compound such as ethylene carbonate (EC), propylene carbonate (PC), diethyl carbonate (DEC), methylethyl carbonate (MEC), dimethyl carbonate (DMC), fluoroethylene carbonate (FEC), vinylene carbonate (VC); nitrile compounds such as acetonitrile; carboxylate esters such as ethyl acetate, propyl acetate, methyl propionate, ethyl propionate and propyl propionate; or the like may be used. These organic solvents may be used alone or in combination of two or more.

### <5-2. Outer Package>

As the Outer Package, a metal, an aluminum laminate material or the like can be suitably used. The shape of the battery may be any of a coin type, a button type, a seat type, a cylindrical type, a square type, a flat type, or the like.

### EXAMPLES

The present invention will be described in more detail below with reference to examples and comparative examples of the negative electrode binder, the negative electrode slurry, the negative electrode, and the lithium-ion secondary battery of the lithium-ion secondary battery. The present invention is not limited to these examples.

### <1. Preparation of Negative Electrode Binder (Copolymer (P))>

The compositions of monomers used in Examples 1 to 7 and Comparative Examples 1 to 8 are shown in Table 2. The methods for producing the negative electrode binder in Examples 1 to 7 and Comparative Examples 1 to 8 are the same except for the compositions of the monomers. Details of the monomers and reagents are as follows. When a monomer is used as a solution, the amount of the monomer used in the table is the amount of the monomer itself without the solvent.

Monomer (A-1): N-vinylacetamide (NVA) (manufactured by Showa Denko K.K.)
Monomer (B-1): Sodium acrylate (AaNa) (28.5% by mass aqueous solution)
Monomer (C-1): Benzyl acrylate
Monomer (C-2): Phenoxyethyl acrylate
Monomer (D-1): Methoxypolyethylene glycol methacrylate (manufactured by EVONIK INDUSTRIES; VISIOMER (registered trademark) MPEG 2005 MA W) (In formula (2), R³=CH₃, R⁴=H, R⁶=CH₃, n=45, m=0, and m+n=45) in 50.0% by mass aqueous solution
Monomer (E-1): Styrene
Initiator: 2,2'-azobis(2-methylpropionamidine)dihydrochloride (manufactured by Wako Pure Chemical Industries, Ltd.; V-50) and ammonium persulfate (manufactured by Wako Pure Chemical Industries, Ltd.)

In a separable flask equipped with a cooling tube, a thermometer, a stirrer, and a dropping funnel, a total of 100 parts by mass of monomers having the composition shown in Table 2, 0.2 parts by mass of 2,2'-azobis(2-methylpropionamidine)dihydrochloride, 0.05 parts by mass of ammonium persulfate, and 693 parts by mass of water were charged at 30°C. The mixture was heated to 80°C and polymerized for 4 hours.

Then, water was added so that the content of the negative electrode binder (copolymer (P)) was 10.0% by mass (the added amount of water was adjusted in consideration of the water contained in the monomer (B-1)) to prepare the negative electrode binder compositions Q1 to Q7 and CQ1 to CQ8. In the following description, "each of copolymers P1 to P7 and CP1 to CP8" may be referred to as "copolymer (P)", and "each of the negative electrode binder compositions Q1 to Q7 and CQ1 to CQ8" may be referred to as "negative electrode binder composition (Q)".

### <2. Various Measurements of Negative Electrode Binder Compositions>

The following measurements were carried out on the copolymer (P) and the negative electrode binder composition (Q). The measurement results are shown in Table 2.

### <2-1. Weight-Average Molecular Weight of Copolymer (P)>

The weight-average molecular weight of the copolymer (P) was determined using gel permeation chromatography (GPC) under the following conditions.

GPC equipment: GPC-101 (manufactured by Showa Denko K.K.)
Solvent: 0.1 M NaNO₃ aqueous solution
Sample Column: Shodex Column Ohpak SB-806 HQ (8.0 mm I.D. × 300 mm) × 2
Reference Column: Shodex Column Ohpak SB-800 RL (8.0 mm I.D. × 300 mm) × 2
Column temperature: 40°C
Sample concentration: 0.1% by mass
Detector: RI-71 S (manufactured by Shimadzu Corporation)
Pump: DU-H 2000 (manufactured by Shimadzu Corporation)
Pressure: 1.3 MPa
Flow rate: 1 ml/min
Molecular weight standard: Pullulan (P-5, P-10, P-20, P-50, P-100, P-200, P-400, P-800, P-1300, P-2500 (manufactured by Showa Denko K.K.))

### <2-2. pH of Electrode Binder Composition (Q)>

The pH of the electrode binder composition (Q) was measured using a pH meter (manufactured by Toa DKK Co., Ltd.) at a liquid temperature of 23°C.

### <3. Preparation of Negative Electrode Slurry>

As graphite SCMG (registered trademark)-XRs (manufactured by Showa Denko K.K.) of 76.8 parts by mass, silicon monoxide (SiO) (manufactured by Sigma-Aldrich) of 19.2 parts by mass, VGCF (registered trademark)-H (manufactured by Showa Denko K.K.) of 1 part by mass, binder composition (Q) of 30 parts by mass (containing 3 parts by mass of the copolymer (P) and 27 parts by mass of water) and water of 20 parts by mass were mixed. Mixing was carried out using a stirring mixer (rotary revolution stirring mixer) at 2000 rpm for 4 minutes. Further, 53 parts by mass of water was added to the obtained mixture, and the mixture was further mixed at 2000 revolutions per minute for 4 minutes in the mixing apparatus to prepare a negative electrode slurry.

### <4. Appearance Evaluation of Negative Electrode Slurry>

The appearance of the negative electrode slurry prepared for the preparation of the battery was confirmed by visual observation, and the size of the aggregate was measured with a micrometer. A case in which agglomerates having a maximum dimension of 1 mm or more are present in 10 g of the negative electrode slurry is represented by "×", and a case in which agglomerates having a maximum dimension of 1 mm or more are not present is represented by "∘".

### <5. Manufacture of Negative Electrode and Battery>

### <5-1. Preparation of Negative Electrode>

The prepared negative electrode slurry was applied to one side of a copper foil having a thickness of 10 µm (current collector) using a doctor blade so that the weight per area after drying was 8 mg/cm². The copper foil coated with the negative electrode slurry was dried at 60°C for 10 minutes and then dried at 100°C for 5 minutes to prepare a negative electrode sheet having a negative electrode active material layer formed thereon. The negative electrode sheet was pressed using a die press at a press pressure of 1 t/cm². The pressed negative electrode sheet was cut out to 22 mm × 22 mm, and a negative electrode was manufactured by attaching a conductive tab.

### <5-2. Preparation of Positive Electrode>

A positive electrode slurry was prepared by mixing 90 parts by mass of LiNi_{1/3}Mn_{1/3}Co_{1/3}O₂, 5 parts by mass of acetylene black, and 5 parts by mass of polyvinylidene fluoride, and then mixing 100 parts by mass of N-methylpyrrolidone (The ratio of LiNi_{1/3}Mn_{1/3}Co_{1/3}O₂ in the solid content was 0.90.).

The prepared positive electrode slurry was applied to one side of an aluminum foil having a thickness of 20 µm (current collector) by a doctor blade method so that the weight per area after drying was 22.5mg/cm²(22.5×10⁻³g/cm²). The aluminum foil coated with the positive electrode slurry was dried at 120°C for 5 minutes and then pressed by a roll press to prepare a positive electrode sheet having a positive electrode active material layer having a thickness of 100 µm. The obtained positive electrode sheet was cut out to 20 mm × 20 mm (2.0 cm × 2.0 cm), and a positive electrode was manufactured by attaching a conductive tab.

The theoretical capacity of the produced positive electrode is determined by the following equation: the weight per area after drying of the positive electrode slurry (22.5×10⁻³g/cm²) × the coating area of the positive electrode slurry (2.0 cm × 2.0 cm) × the capacity of LiNi_{1/3}Mn_{1/3}Co_{1/3}O₂ as the positive electrode active material (160 mAh/g) × the ratio of LiNi_{1/3}Mn_{1/3}Co_{1/3}O₂ in the solid content (0.90). The calculated value is 13 mAh.

### <5-3. Preparation of Electrolyte Solution>

A mixed solvent was prepared by mixing ethylene carbonate (EC), ethyl methyl carbonate (EMC), and fluoroethylene carbonate (FEC) in a volume ratio of 30:60:10. An electrolyte solution was prepared by dissolving LiPF₆ in the mixed solvent so as to have a concentration of 1.0 mol/L, and dissolving vinylene carbonate (VC) so as to have a concentration of 1.0% by mass.

### <5-4. Assembling Battery>

The positive electrode and the negative electrode are arranged so that the active material layer of the positive electrode and the active material layer of the negative electrode are opposite to each other through a separator made of a polyolefin porous film, and are housed in an aluminum laminate outer package (battery pack). The electrolyte solution was injected into the outer package and the outer package was packed with a vacuum heat sealer to obtain a laminate type battery.

**[Table 2]**

| Table 2-1 | | | | Example | | | | | | |
|---|---|---|---|---|---|---|---|---|---|---|
| | | | | 1 | 2 | 3 | 4 | 5 | 6 | 7 |
| Negative electrode binder | | | | P1 | P2 | P3 | P4 | P5 | P6 | P7 |
| | | Monomer (A) (% by mass) | N-Vinylacetamide (A-1) | 10.0 | 10.0 | 2.0 | 10.0 | 10.0 | 10.0 | **1.0** |
| | | Monomer (B) (% by mass) | Sodium acrylate (B-1) | 80.0 | 75.0 | 86.0 | 65.0 | 80.0 | 75.0 | 97.0 |
| | | Monomer (C) | Benzyl acrylate (C-1) | 10.0 | 10.0 | 10.0 | 20.0 | - | - | 1.0 |
| | Copoly- mer (P) | (% by mass) | Phenoxyethyl acrylate (C-2) | - | - | - | - | 10.0 | 10.0 | - |
| | | Monomer (D) (% by mass) | VISIOMER^{®} MPEG2005 Methoxypol-yethylene glycol methacrylate (n = 45, molecular weight 2005) (D-1) | - | 5.0 | 2.0 | 5.0 | - | 5.0 | 1.0 |
| | | Monomer (E) (% by mass) | Styrene (E-1) | - | - | - | - | - | - | - |
| | | Weight-average molecular weight (million) | | 2.70 | 2.70 | 2.80 | 2.50 | 2.70 | 2.60 | 2.50 |
| | | | | Q1 | Q2 | Q3 | Q4 | Q5 | Q6 | Q7 |
| Negative electrode binder composition (Q) | Content of negative electrode binder (% by mass) | | | 10.0 | 10.0 | 10.0 | 10.0 | 10.0 | 10.0 | 10.0 |
| | pH | | | 8.3 | 7.8 | 8 | 7.8 | 8.3 | 7.8 | 7.9 |
| Negative electrode slurry | Content of electrode binder with respect to total amount of negative electrode active material, conductive auxiliary agent, and electrode binder (% by mass) | | | 3 | 3 | 3 | 3 | 3 | 3 | 3 |
| | Slurry appearance (visual observation) | | | ○ | ○ | ○ | ○ | ○ | ○ | ○ |
| Evaluation of negative electrode and battery | Negative electrode appearance (presence or absence of cracks, visual observation) | | | 0 | 0 | 0 | 0 | 0 | 0 | 0 |
| | Peeling strength of negative electrode active material layer (mN/mm) | | | 28 | 26 | 27 | 28 | 26 | 26 | 28 |
| | Initial efficiency (%) | | | 78.2 | 78.0 | 77.9 | 77.9 | 77.5 | 77.3 | 77.0 |
| | Negative electrode swelling (%) | | | 43.8 | 44.6 | 44.2 | 43.7 | 45.1 | 45.3 | 44.2 |
| | Discharge capacity retention rate (%) (25°C, 100 cycles) | | | 88.9 | 89.0 | 88.8 | 88.5 | 88.7 | 88.6 | 88.9 |

| Table 2-2 | | | | Comparative Example | | | | | | | |
|---|---|---|---|---|---|---|---|---|---|---|---|
| | | | | 1 | 2 | 3 | 4 | 5 | 6 | 7 | 8 |
| Negative electrode binder | | | | CP1 | CP2 | CP3 | CP4 | CP5 | CP6 | CP7 | CP8 |
| | | Monomer (A) (% by mass) | N-Vinylacetamide (A-1) | 10.0 | 10.0 | 10.0 | - | 60.0 | 10.0 | 10.0 | 10.0 |
| | | Monomer (B) (% by mass) | Sodium acrylate (B-1) | 90.0 | 80.0 | 60.0 | 85.0 | 25.0 | 60.0 | 55.0 | 80.0 |
| | | Monomer (C) | Benzyl acrylate (C-1) | - | - | 10.0 | 10.0 | 10.0 | 30.0 | 30.0 | - |
| | Copoly- mers (P) | (% by mass) | Phenoxyethyl acrylate (C-2) | - | - | - | - | - | - | - | - |
| | | Monomer (D) (% by mass) | VISIOMER^{®} MPEG2005 Methoxy-polyethylene glycol methacrylate (n = 45, molecular weight 2005) (D-1) | - | 10.0 | 20.0 | 5.0 | 5.0 | - | 5.0 | - |
| | | Monomer (E) (% by mass) | Styrene (E-1) | - | - | - | - | - | - | - | 10.0 |
| | | Weight-average molecular weight (million) | | 2.70 | 2.60 | 2.70 | 1.80 | 2.30 | 2.20 | 2.30 | 2.40 |
| | | | | CQ1 | CQ2 | CQ3 | CQ4 | CQ5 | CQ6 | CQ7 | CQ8 |
| Negative electrode binder composition (Q) | Content of negative electrode binder (% by mass) | | | 10.0 | 10.0 | 10.0 | 10.0 | 10.0 | 10.0 | 10.0 | 10.0 |
| | pH | | | 8.6 | 7.7 | 8.1 | 8.2 | 7.2 | 8.0 | 7.9 | 8.1 |
| Negative electrode slurry | Content of electrode binder with respect to total amount of negative electrode active material, conductive auxiliary agent, and electrode binder (% by mass) | | | 3 | 3 | 3 | 3 | 3 | 3 | 3 | 3 |
| | Slurry appearance (visual observation) | | | ○ | ○ | × | × | × | × | × | × |
| Evaluation of negative electrode and battery | Negative electrode appearance (presence or absence of cracks, visual observation) | | | 6 | 0 | 3 | Not made | 4 | 0 | 0 | 0 |
| | Peeling strength of negative electrode active material layer (mN/mm) | | | 25 | 17 | 10 | | 10 | 14 | 9 | 8 |
| | Initial efficiency (%) | | | 78.0 | 74.5 | 72.1 | | 71.3 | 74.1 | 72.5 | 73.1 |
| | Negative electrode swelling (%) | | | 45.4 | 52.8 | 56.3 | | 55.1 | 51.5 | 53.1 | 62.7 |
| | Discharge capacity retention rate (%) (25°C, 100 cycles) | | | 87.5 | 81.5 | 78.2 | | 79.9 | 83.4 | 80.1 | 82.1 |

### <6. Evaluation of Negative Electrode and Battery>

The negative electrode and the battery of each example and comparative example were evaluated. The evaluation method is described as follows, and the evaluation results are as shown in Table 2.

### <6-1. Number of Negative Electrode Cracks>

The surface of the negative electrode sheet was checked by visual observation for appearance and the number of cracks in a rectangular area of 5 cm × 20 cm was counted.

### <6-2. Peeling Strength of Negative Electrode Active Material Layer>

At 23°C, the negative electrode active material layer formed on the negative electrode sheet, and the SUS plate were bonded together using a double-sided tape (NITTOTAPE (registered trademark) No 5, manufactured by Nitto Denko Corporation) to prepare a sample for evaluating the peeling strength. Using this sample, the value of the peeling force was obtained by peeling the negative electrode active material layer from the negative electrode sheet by 180° at a peeling width of 25 mm and a peeling speed of 100 mm/min; and then the value of the peeling force was divided by the peeling width of 25 mm to yield a value which was used as the peeling strength.

### <6-3. Initial Battery Efficiency>

The initial efficiency of the cell was measured under the condition of 25°C by the following procedure. First, the battery was charged to 4.2 V with a current of 0.2 C (CC charge), and then charged to 0.05 C with a voltage of 4.2 V (CV charging). After standing for 30 minutes, until the voltage reached 2.75 V, discharge was performed with a current of 0.2 C (CC discharge). A series of operations of CC charging, CV charging, and CC discharging was repeated for five cycles. The sum of the time integral values of the current in the n-th cycle CC charging and the CV charging is defined as the charging capacity of the n-th cycle (mAh), and the time integral value of the current in the n-th cycle CC discharging is defined as the discharging capacity of the n-th cycle (mAh). The average value of the discharge capacities of the fourth and fifth cycles was taken as the initial discharge capacity, and the initial efficiency was calculated by the following equation [1]. The theoretical cathode capacitance is the value obtained in the description of the fabrication of the cathode. Initial efficiency (%) = {Initial discharge capacity / 13 mAh (theoretical cathode capacity)} × 100 [1]

### <6-4. Negative Electrode Swelling>

The measurement of the electrode swelling of the negative electrode was carried out by the following procedure. First, before assembling the battery, the thickness of the negative electrode was measured at 5 points using a micrometer (MDH-25MB manufactured by MITSUTOYO CO., LTD.), and the average value was taken as the initial thickness (µm). Next, the battery was assembled, and after the initial efficiency was measured as described above, CC charging and CV charging were performed as described above, and the battery was fully charged. Thereafter, the battery was disassembled, the negative electrode was taken out, and the thickness of the negative electrode was measured at five points without drying, and the average value was determined to be the thickness (µm) at the time of disassembly. The negative electrode swelling was calculated by the following equation [2]. Negative electrode swelling (%) = {1 - (Thickness at the time of disassembly / Initial thickness)} × 100 [2]

### <6-5. Battery Discharge Capacity Retention Rate (100 cycles)>

The measurement of discharge capacity retention rate of the battery (charge/discharge cycle test of the battery) was carried out under the condition of 25°C by the following procedure. First, the battery was charged to 4.2 V with a current of 1 C (CC charge), and then charged to 0.05 C with a voltage of 4.2 V (CV charging). After standing for 30 minutes, until the voltage reached 2.75 V, discharge was performed with a current of 1 C (CC discharge). A series of operations of CC charging, CV charging, and CC discharging was one cycle. The sum of the time integral values of the current in the n-th cycle CC charging and the CV charging is defined as the charging capacity of the n-th cycle (mAh), and the time integral value of the current in the n-th cycle CC discharging is defined as the discharging capacity of the n-th cycle (mAh). The discharge capacity retention rate of the n-th cycle of the battery is a ratio (%) of the discharge capacity of the n-th cycle to that of the first cycle. In this embodiment and the comparative example, the discharge capacity retention rate at the 100 cycle was evaluated.

### <7. Evaluation Results>

As can be seen from Table 2, the negative electrode binders and the negative electrode slurries prepared in Examples 1 to 7 can greatly improve the peeling strength of the electrode active material layers to the current collectors while suppressing the occurrence of cracks in the electrode active material layers formed on the current collectors. It can be seen that the negative electrode binders produced in Examples 1 to 7 can suppress the generation of agglomerates in the negative electrode slurries.

It can be seen that the negative electrodes produced in Examples 1 to 7 has few cracks and has a high peeling strength of the electrode active material layers to the current collectors. It can be seen that the negative electrodes prepared in Examples 1 to 7 have a small negative electrode swelling associated with the use of the battery when it is incorporated into the lithium-ion secondary battery.

The lithium-ion secondary batteries produced in Examples 1 to 7 are provided with negative electrodes having few cracks and a high peeling strength of the electrode active material layer to the current collector. The lithium-ion secondary batteries produced in Examples 1 to 7 have a high initial efficiency and a high discharge capacity retention rate, and can suppress negative electrode swelling.

In Comparative Example 1, the monomer (C) was not used in the synthesis of copolymer (P). Cracks were observed in the negative electrode prepared in Comparative Example 1.

In Comparative Example 2, the monomer (D) was used instead of monomer (C) in the synthesis of copolymer (P). In the negative electrode prepared in Comparative Example 2, no crack was observed, but the peeling strength of the negative electrode active material layer was low. When the negative electrode prepared in Comparative Example 2 was incorporated into a lithium-ion secondary battery, the negative electrode swelling caused by the use of the battery was large. The lithium-ion secondary battery produced in Comparative Example 2 had a low initial efficiency and a low discharge capacity retention rate.

In Comparative Example 3, in the synthesis of the copolymer (P), the percentage of the monomers (A), (B), and (C) with respect to the total monomer used is small. In Comparative Example 5, in the synthesis of the copolymer (P), a large amount of the monomer (A) was used, but a small amount of the monomer (B) was used. The electrode slurries prepared in Comparative Examples 3 and 5 had agglomerates. Cracks were observed in the negative electrodes prepared in Comparative Examples 3 and 5, and the peeling strength of the negative electrode active material layers was also low. The negative electrodes produced in Comparative Examples 3 and 5 had a large negative electrode swelling associated with the use of the battery when the negative electrodes were incorporated into the lithium-ion secondary batteries. The lithium-ion secondary batteries produced in Comparative Examples 3 and 5 had a low initial efficiency and a low discharge capacity retention rate.

In Comparative Example 4, the monomer (A) was not used in the synthesis of copolymer (P). Agglomerates were observed in the negative electrode slurry prepared in Comparative Example 4. The negative electrode slurry of Comparative Example 4 could not be applied flatly to the current collector, and as a result, it is impossible to prepare an negative electrode and battery which can be evaluated.

In Comparative Examples 6 and 7, a large amount of the monomer (C) was used for the synthesis of the copolymer (P). In Comparative Example 8, styrene was used in place of the monomer (C) in the synthesis of copolymer (P). Agglomerates were observed in the negative electrode slurries prepared in these comparative examples. In the negative electrodes prepared in these comparative examples, the peeling strength of the negative electrode active material layer was low, and the negative electrode swelling accompanying the use of the battery was large. The lithium-ion secondary battery produced in these comparative examples had a low initial efficiency and low discharge capacity retention rate.

## Claims

1. A binder for a nonaqueous secondary battery electrode, comprising a copolymer (P) which comprises:
a structural unit (a) derived from a monomer (A) represented by formula (1), 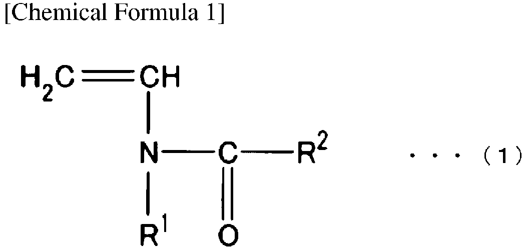
wherein in the formula, R¹ and R² are each independently a hydrogen atom or
an alkyl group having 1 to 5 carbon atoms,
a structural unit (b) derived from a monomer (B) which is at least one selected from the group consisting of a (meth)acrylic acid and a salt thereof; and
a structural unit (c) derived from a monomer (C) which is an ethylenically unsaturated carboxylic acid ester of an aromatic alcohol,
wherein the content of each structural unit in the copolymer (P) is as follows:
a content of the structural unit (a) is 0.5% by mass or more and 20.0% by mass or less,
a content of the structural unit (b) is 50.0% by mass or more and 98.0% by mass or less,
a content of the structural unit (c) is 0.3% by mass or more and 28.0% by mass or less, and
a total content of the structural units (a), (b), and (c) is 85% by mass or more.

2. The binder for the nonaqueous secondary battery electrode according to claim 1, comprising a structural unit (d) derived from a monomer (D) represented by formula (2), 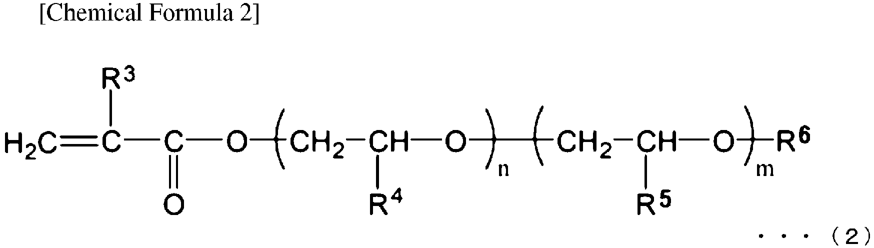 wherein in the formula, R³, R⁴ and R⁶ are each independently a hydrogen atom or an alkyl group having 1 to 5 carbon atoms; R⁵ is an alkyl group having 1 to 6 carbon atoms, and has more carbon atoms than R⁴; n is an integer of 1 or greater; m is an integer of 0 or greater; and n + m ≥ 20,
wherein a content of the structural unit (d) is 0.3% by mass or more and 18.0% by mass or less.

3. The binder for the nonaqueous secondary battery electrode according to claim 2, wherein n + m ≤ 500 in the formula (2).

4. The binder for the nonaqueous secondary battery electrode according to claim 2 or 3, wherein n + m ≥ 30 in the formula (2).

5. The binder for the nonaqueous secondary battery electrode according to any one of claims 1 to 4, wherein the monomer (A) is N-vinylformamide or N-vinylacetamide.

6. The binder for a nonaqueous secondary battery electrode according to any one of claims 1 to 5, wherein the monomer (B) is a salt of (meth)acrylic acid.

7. The binder for the nonaqueous secondary battery electrode according to any one of claims 1 to 6, wherein the monomer (C) comprises a (meth)acrylic acid ester of an aromatic alcohol.

8. The binder for the nonaqueous secondary battery electrode according to any one of claims 1 to 7, wherein the copolymer (P) has a weight-average molecular weight of 1 million or more and 10 million or less determined by the method mentioned in the specification.

9. The binder for the nonaqueous secondary battery electrode according to any one of claims 1 to 8, wherein the content of the structural unit (b) derived from the monomer (B) in the copolymer (P) is 60.0% by mass or more to 90.0% by mass or less.

10. A binder composition for a nonaqueous secondary battery electrode, comprising:
the binder for the nonaqueous secondary battery electrode according to any one of claims 1 to 9; and
an aqueous medium.

11. The binder composition for the nonaqueous secondary battery electrode according to claim 10, wherein the nonaqueous secondary battery is a lithium-ion secondary battery.

12. A slurry for a nonaqueous secondary battery electrode, comprising:
the binder for the non-aqueous secondary battery electrode according to any one of claims 1 to 9;
an electrode active material; and
an aqueous medium.

13. A non-aqueous secondary battery electrode, comprising:
a current collector; and
an electrode active material layer which is formed on a surface of the current collector,
wherein the electrode active material layer comprises
the binder for a nonaqueous secondary battery electrode according to any one of claims 1 to 9; and
an electrode active material.

14. A lithium-ion secondary battery comprising the electrode according to claim 13.

## Patentansprüche

1. Bindemittel für eine nichtwässrige Sekundärbatterieelektrode, umfassend ein Copolymer (P), das umfasst:
eine Struktureinheit (a), die von einem Monomer (A) der Formel (1) abgeleitet ist, 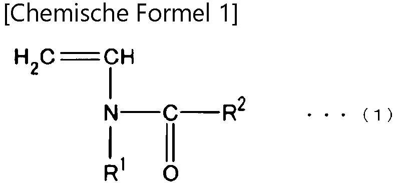 wobei in der Formel R¹ und R² jeweils unabhängig voneinander ein Wasserstoffatom oder eine Alkylgruppe mit 1 bis 5 Kohlenstoffatomen sind,
eine Struktureinheit (b), die von einem Monomer (B) abgeleitet ist, das mindestens eines ist, das aus der Gruppe ausgewählt ist, die aus einer (Meth)acrylsäure und einem Salz davon besteht; und
eine Struktureinheit (c), die von einem Monomer (C) abgeleitet ist, das ein ethylenisch ungesättigter Carbonsäureester eines aromatischen Alkohols ist,
wobei der Gehalt jeder Struktureinheit in dem Copolymer (P) wie folgt ist:
der Gehalt der Struktureinheit (a) beträgt 0,5 Massenprozent oder mehr und 20,0 Massenprozent oder weniger,
der Gehalt der Struktureinheit (b) beträgt 50,0 Massenprozent oder mehr und 98,0 Massenprozent oder weniger,
der Gehalt der Struktureinheit (c) beträgt 0,3 Masseprozent oder mehr und 28,0 Masseprozent oder weniger und
der Gesamtgehalt der Struktureinheiten (a), (b) und (c) beträgt 85 Masseprozent oder mehr.

2. Bindemittel für eine nichtwässrige Sekundärbatterieelektrode nach Anspruch 1, umfassend eine Struktureinheit (d), die von einem Monomer (D) der Formel (2) abgeleitet ist, 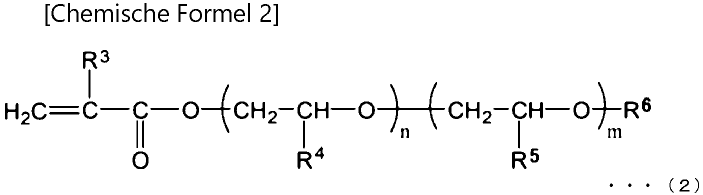 wobei in der Formel R³, R⁴ und R⁶ jeweils unabhängig voneinander ein Wasserstoffatom oder eine Alkylgruppe mit 1 bis 5 Kohlenstoffatomen sind; R⁵ eine Alkylgruppe mit 1 bis 6 Kohlenstoffatomen ist und mehr Kohlenstoffatome als R⁴ aufweist; n eine ganze Zahl von 1 oder größer ist; m eine ganze Zahl von 0 oder größer ist; und n + m ≥ 20,
wobei der Gehalt der Struktureinheit (d) 0,3 Massenprozent oder mehr und 18,0 Massenprozent oder weniger beträgt.

3. Bindemittel für eine nichtwässrige Sekundärbatterieelektrode nach Anspruch 2, wobei n + m≤ 500 in der Formel (2).

4. Bindemittel für eine nichtwässrige Sekundärbatterieelektrode nach Anspruch 2 oder 3, wobei n + m ≥ 30 in der Formel (2) ist.

5. Bindemittel für eine nichtwässrige Sekundärbatterieelektrode nach einem der Ansprüche 1 bis 4, wobei das Monomer (A) N-Vinylformamid oder N-Vinylacetamid ist.

6. Bindemittel für eine nichtwässrige Sekundärbatterieelektrode nach einem der Ansprüche 1 bis 5, wobei das Monomer (B) ein Salz der (Meth)acrylsäure ist.

7. Bindemittel für eine nichtwässrige Sekundärbatterieelektrode nach einem der Ansprüche 1 bis 6, wobei das Monomer (C) einen (Meth)acrylsäureester eines aromatischen Alkohols umfasst.

8. Bindemittel für eine nichtwässrige Sekundärbatterieelektrode nach einem der Ansprüche 1 bis 7, wobei das Copolymer (P) ein durch das in der Beschreibung genannte Verfahren bestimmtes gewichtsmittleres Molekulargewicht von 1 Million oder mehr und 10 Millionen oder weniger aufweist.

9. Bindemittel für eine nichtwässrige Sekundärbatterieelektrode nach einem der Ansprüche 1 bis 8, wobei der Gehalt der vom Monomer (B) abgeleiteten Struktureinheit (b) im Copolymer (P) 60,0 Massenprozent oder mehr bis 90,0 Massenprozent oder weniger beträgt.

10. Bindemittelzusammensetzung für eine nichtwässrige Sekundärbatterieelektrode, umfassend:
das Bindemittel für eine nichtwässrige Sekundärbatterieelektrode nach einem der Ansprüche 1 bis 9; und
einem wässrigen Medium.

11. Bindemittelzusammensetzung für die nichtwässrige Sekundärbatterieelektrode nach Anspruch 10, wobei die nichtwässrige Sekundärbatterie eine Lithium-Ionen-Sekundärbatterie ist.

12. Aufschlämmung für eine nichtwässrige Sekundärbatterieelektrode, umfassend:
das Bindemittel für die nichtwässrige Sekundärbatterieelektrode nach einem der Ansprüche 1 bis 9;
ein aktives Elektrodenmaterial; und
einem wässrigen Medium.

13. Nichtwässrige Sekundärbatterieelektrode, umfassend:
einen Stromkollektor; und
eine Schicht aus aktivem Elektrodenmaterial, die auf einer Oberfläche des Stromkollektors ausgebildet ist,
wobei die Schicht aus aktivem Elektrodenmaterial
das Bindemittel für eine nichtwässrige Sekundärbatterieelektrode nach einem der Ansprüche 1 bis 9; und
ein aktives Elektrodenmaterial umfasst.

14. Lithium-Ionen-Sekundärbatterie mit einer Elektrode nach Anspruch 13.

## Revendications

1. Liant pour une électrode de batterie rechargeable non aqueuse, comprenant un copolymère (P) qui comprend :
un motif structural (a) dérivé d'un monomère (A) représenté par la formule (1), 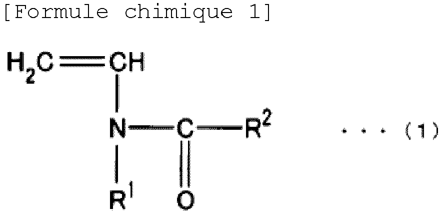
dans lequel dans la formule, R¹ et R² sont chacun indépendamment un atome d'hydrogène ou un groupe alkyle présentant 1 à 5 atomes de carbone,
un motif structural (b) dérivé d'un monomère (B) qui est au moins un choisi dans le groupe constitué d'un acide (méth)acrylique et d'un sel de celui-ci ; et
un motif structural (c) dérivé d'un monomère (C) qui est un ester d'acide carboxylique éthyléniquement insaturé d'un alcool aromatique,
dans lequel la teneur de chaque motif structural dans le copolymère (P) est comme suit :
une teneur du motif structural (a) est de 0,5 % en masse ou plus et de 20,0 % en masse ou moins,
une teneur du motif structural (b) est de 50,0 % en masse ou plus et de 98,0 % en masse ou moins,
une teneur du motif structural (c) est de 0,3 % en masse ou plus et de 28,0 % en masse ou moins, et
une teneur totale des motifs structuraux (a), (b) et (c) est de 85 % en masse ou plus.

2. Liant pour l'électrode de batterie rechargeable non aqueuse selon la revendication 1, comprenant un motif structural (d) dérivé d'un monomère (D) représenté par la formule (2), 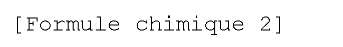 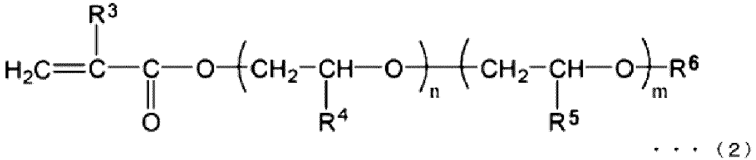
dans lequel dans la formule, R³, R⁴ et R⁶ sont chacun indépendamment un atome d'hydrogène ou un groupe alkyle présentant 1 à 5 atomes de carbone ; R⁵ est un groupe alkyle présentant 1 à 6 atomes de carbone, et présente davantage d'atomes de carbone que R⁴ ; n est un nombre entier supérieur ou égal à 1 ; m est un nombre entier supérieur ou égal à 0 ; et n + m ≥ 20,
dans lequel une teneur du motif structural (d) est de 0,3 % en masse ou plus et de 18,0 % en masse ou moins.

3. Liant pour l'électrode de batterie rechargeable non aqueuse selon la revendication 2, dans lequel n + m ≤ 500 dans la formule (2).

4. Liant pour l'électrode de batterie rechargeable non aqueuse selon la revendication 2 ou 3, dans lequel n + m ≥ 30 dans la formule (2).

5. Liant pour l'électrode de batterie rechargeable non aqueuse selon l'une quelconque des revendications 1 à 4, dans lequel le monomère (A) est du N-vinylformamide ou du N-vinylacétamide.

6. Liant pour une électrode de batterie rechargeable non aqueuse selon l'une quelconque des revendications 1 à 5, dans lequel le monomère (B) est un sel d'acide (méth)acrylique.

7. Liant pour l'électrode de batterie rechargeable non aqueuse selon l'une quelconque des revendications 1 à 6, dans lequel le monomère (C) comprend un ester d'acide (méth)acrylique d'un alcool aromatique.

8. Liant pour l'électrode de batterie rechargeable non aqueuse selon l'une quelconque des revendications 1 à 7, dans lequel le copolymère (P) présente un poids moléculaire moyen en poids de 1 million ou plus et de 10 millions ou moins déterminé par le procédé mentionné dans la description.

9. Liant pour l'électrode de batterie rechargeable non aqueuse selon l'une quelconque des revendications 1 à 8, dans lequel la teneur du motif structural (b) dérivé du monomère (B) dans le copolymère (P) est de 60,0 % en masse ou plus à 90,0 % en masse ou moins.

10. Composition de liant pour une électrode de batterie rechargeable non aqueuse, comprenant :
le liant pour l'électrode de batterie rechargeable non aqueuse selon l'une quelconque des revendications 1 à 9 ; et
un milieu aqueux.

11. Composition de liant pour l'électrode de batterie rechargeable non aqueuse selon la revendication 10, dans laquelle la batterie rechargeable non aqueuse est une batterie rechargeable au lithium-ion.

12. Suspension épaisse pour une électrode de batterie rechargeable non aqueuse, comprenant :
le liant pour l'électrode de batterie rechargeable non aqueuse selon l'une quelconque des revendications 1 à 9 ;
un matériau actif d'électrode ; et
un milieu aqueux.

13. Électrode de batterie rechargeable non aqueuse, comprenant :
un collecteur de courant ; et
une couche de matériau actif d'électrode qui est formée sur une surface du collecteur de courant, dans laquelle la couche de matériau actif d'électrode comprend
le liant pour une électrode de batterie rechargeable non aqueuse selon l'une quelconque des revendications 1 à 9 ; et
un matériau actif d'électrode.

14. Batterie rechargeable au lithium-ion comprenant l'électrode selon la revendication 13.
